# EUROPEAN PATENT APPLICATION

(11) **EP 1 791 010 A2**
(43) Date of publication of application: **30.05.2007**
(21) Application number: 06124722.7
(22) Date of filing: 24.11.2006
(51) Int. Cl.: G02B 6/42, F21V 8/00

(54) **Light-emitting unit and method of producing the same**

(30) Priority: 24.11.2005 EP 05111208
(71) Applicant: TPO Hong Kong Holding Limited, Shatin, Hong Kong (CN)
(72) Inventor: Verweg, Frans, 6411 NK Heerlen (NL); van der Wel, Pieter, 6411 NK Heerlen (NL); van Montfort, Vincent Johannes Jacobus, 6411 NK Heerlen (NL); de Boer, Hedzer, 6411 NK Heerlen (NL); Ansems, Will, 6411 NK Heerlen (NL)
(74) Representative: Hutter, Jacobus Johannes

(57) **Abstract**

A light-emitting unit (100) comprising a solid state light source (110) mounted on a leadframe (130) and a lightguide (120) into which the solid state light source (110) is to in-couple light into its light guiding direction. The solid state light source (110) and at least a part of the leadframe (130) are molded with a molded material, wherein the molding material forms at least a part of the lightguide(120).

## Description

This invention relates to a light-emitting unit comprising a solid state light source, a lightguide arranged to guide light received from the solid state light source, the solid state light source positioned to in-couple light into the lightguide in a light guiding direction.

This invention further relates to a backlight unit comprising the light-emitting unit as described above.

This invention further relates to a portable electronic device such as a mobile phone, a pocket personal computer and a PDA comprising such a light-emitting unit as described above.

This invention further relates to a display device comprising such a light-emitting unit as described above.

This invention further relates to a method of producing a light-emitting unit as described above.

An embodiment of a light-emitting unit as described above is known from EP-0751340-A2. This document discloses a light-emitting unit including one or more light sources, which emit light into a lightguide. The lightguide is for example a flat rectangular plate having a lateral direction and a longitudinal direction. The lateral direction is along the breadth of the plate and the longitudinal direction is along the length of the plate. The light guiding direction is typically chosen as the longitudinal direction. The light sources are placed along a side in the lateral direction, for example in cavities, slots or openings, and connected to the lightguide mechanically by means of bonding, potting, gluing or molding. The arrangement is such that the light emitted from the light sources is input into the lightguide along the longitudinal direction such that the light traverses along the longitudinal direction of the lightguide.

The above-mentioned light-emitting unit has several components, which are difficult to assemble during production, as the components are vulnerable and therefore complex to handle during production. Moreover, the light-emitting unit thus obtained is a fragile device in itself and has to be handled with care for further processing as for example in assembling a backlight unit.

Therefore it is an object of the invention to provide a light-emitting unit as described above that is easy to manufacture and easy to handle in further processing.

It is a further object of the invention to produce such a light-emitting unit.

A first object according to the invention is realized in that a light-emitting unit comprises a solid state light source, a lightguide arranged to guide light received from the solid state light source, wherein the solid state light source is positioned such that light emitted from the solid state light source is in-coupled into the lightguide in a light-guiding direction; the light-emitting unit further comprises a leadframe; the solid state light source is mounted on the leadframe, and the solid state light source and at least a part of the leadframe are molded with a molding material forming at least a part of the lightguide.

The solid state light source, for example a light emitting diode (LED), a LED die, a chip from an LED, a laser, a laser diode, etc., is mounted on the leadframe. Mounting the solid state light source on the leadframe provides a firm and secure fixation of the solid state light source as well as a firm and secure support to this part of the lightguide. An advantage of the present mounting is that the leadframe provides better mechanical stability and firm support as compared to lead pins or lead films that tend to easily bend and break. Another advantage of the leadframe is the improved mechanical stability it provides to the solid state light source and to the part of the lightguide around the vicinity of the leadframe.

The solid state light source is positioned such that light emitted is in-coupled into the lightguide in the light guiding direction, for example along the longitudinal direction of a rectangular plate as discussed previously. The advantage of the side in-coupling is that loss of light due to absorption and multiple reflections at the surface of the lightguide is prevented. The side in-coupling provides for a high efficiency of the light in-coupling into the lightguide.

The solid state light source and at least a part of the leadframe are molded with a molding material forming at least a part of the lightguide. For example, the molding material could be a thermoset material. Thermoset materials have the property of becoming permanently hard and rigid when heated or cured after undergoing a chemical reaction. Materials such as polymers, resins or any derivatives of polymers or resins are examples of thermoset materials. This does not rule out the possibility of using thermoplastic materials, which have the property of softening or fusing when heated and then becoming rigid again when cooled. Thermoplastic materials can be re-melted and cooled time after time without undergoing any appreciable chemical change.

It should be noted that the lightguide might be molded in various shapes, for example a rectangular plate, a tile, a rectangular bar or any other shape as desired for the application requirements or use.

The light-emitting unit thus formed is easy to handle and assemble during production because of the stability provided by the leadframe to the molded components. Further, breakage and disintegration of the light-emitting unit is also prevented.

In a further embodiment, the leadframe comprises a first part and a second part, the first part arranged at 90 degrees to the second part. An advantage of the 90 degree bent leadframe is that it enables the solid state light source mounted on the first part of the leadframe to be top-firing, while still allowing freedom in design for the orientation of the solid state light source with respect to the lightguide. The bent leadframe provides a compact and flat arrangement of the light-emitting unit, wherein the second part of the leadframe is arranged to make electrical contact with an external driving circuitry.

In a further embodiment, the leadframe includes a reflector casing. The reflector casing is arranged to be an additional part of the leadframe. The leadframe and the reflector casing are attached to each other forming a single unit. The reflector casing is preferably made in the form of a tray, and can be made with or without a bottom surface. The sides and bottom of the reflector casing can be used as a reflective surface. Preferably the reflector casing is made of metal.

In a further embodiment, the lightguide is integrated within the reflector casing. An advantage with the leadframe and the reflector casing forming a single unit as described above is that the reflector casing and the leadframe with the solid state light source can be molded with a molding material thereby integrating the lightguide within the reflector casing. This prevents the loss of light by eliminating any air interfaces between the lightguide and the reflective casing.

In yet a further embodiment, the reflector casing is a specular reflector. The leadframe also functions as an in-moulded specular reflector. Preferably, the reflector casing is made of metal. The reflector casing may also be made from another material having high reflective properties. An advantage with metals is that metals allow specular reflection of light as compared to white plastics, which inherently diffuse light. A further advantage is that the specular reflector maintains the reflective angles and redirects light at angles that are suitable for total internal reflection thereby reducing the loss of light, as compared to diffuse reflectors, which redistribute the light at different angles.

In a further embodiment, the lightguide comprises a body made of a base material.

In yet a further embodiment, the body is molded with a molding material. The body, which forms the core part of the lightguide, is made of the base material. The base material for example is a material such as glass. The body and at least the part of the leadframe with the mounted solid state light source are molded with the molding material. Molding the glass plate with the leadframe and the reflector casing requires less molding material. The molding fills gaps created while assembling the components of the light-emitting unit, making the optical connection between the solid state light source and the body forming the core lightguide. The body is positioned such that light is in-coupled in its light guiding direction, for example in the case of a rectangular plate the light is in-coupled in the lateral side and traverses along the longitudinal side as described previously. An advantage of providing glass is because glass is cheaper and easily available. Additionally, glass has better optical properties than most thermoset or thermoplastic molding materials.

In a further embodiment, a first part of the lightguide proximate to the solid state light source and the leadframe is made of a heat and/or an UV resistant material and a second part of the lightguide away from the solid state light source is made of a material possessing higher optical transmittance than the heat and/or UV resistant material. An advantage of using the heat and/or UV resistant material is to prevent discoloration and cracking of the first part of the lightguide that is in the vicinity of the solid state light source, which can occur because of the heat and/or UV light generated by the solid state light source. The optical transmittance material forming the second part of the lightguide is to enhance the transmittivity of light in the lightguide such that loss of light due to absorption in the lightguide is reduced.

In a further embodiment, the solid state light source and at least a part of the leadframe in the vicinity of the solid state light source is provided with a compliant layer. This compliant layer is a bridge between the solid state light source and at least a part of the leadframe in the vicinity of the solid state light source on the one side and the molding material on the other side. The compliant layer absorbs thermal stress, which is caused because of the heat generated by the solid state light source. Otherwise, because of the difference in coefficients of thermal expansion of the materials the thermal stress leads to de-lamination and cracking of the molding material. The compliant layer prevents such de-lamination and cracking of the molding material. Preferably, materials such as silicones are used as the complaint layer.

In a further embodiment, the light-emitting unit comprises a further solid state light source mounted on the leadframe and molded with the molding material. In certain implementations there could be one or more solid state light sources mounted on a single leadframe thereby forming for example an array of solid state light sources. These solid state light sources and at least the part of the leadframe are molded with the molding material forming at least a part of the lightguide. An advantage of using multiple light sources is that the light output can be significantly increased. A further advantage is that the intensity of light emitted from the individual solid state light sources from the array may be diminished thereby reducing the thermal load per solid state light source.

In a further embodiment the light-emitting unit comprises a further solid state light source and a further lead frame, the further solid state light source is mounted on the further leadframe, and the further solid state light source and at least a part of the further leadframe are molded with the molding material. In this implementation each solid sate light source is mounted on a respective leadframe. A linear arrangement of individual solid state light sources on the respective leadframes forms an array of solid state light sources and leadframes, the array is then placed in a mold and molded with the molding material, the molding material forms at least the part of the lightguide.

In a certain implementation an array of individual solid state light sources on individual leadframes can be arranged to form an array of light sources. In certain other implementations, an array of solid state light sources mounted on a leadframe and individual solid state light sources mounted on respective leadframes may be combined in an arrangement to form an array of light sources. This gives flexibility in designing the light-emitting unit. Further, the array of solid state light sources may constitute an RGB light source or a monochromatic light source.

A further object of the invention is realized in a backlight unit comprising such a light-emitting unit as described above. The advantage of integrating components is the mechanical stability provided to the backlight unit. In addition, the backlight unit may further comprise brightness enhancements films and a diffuser film. Other advantages have been described above.

A further object of the invention is realized in a portable electronic device comprising such a backlight unit as described above. The devices preferably include mobile phones, PDAs, pocket personal computers, laptop computers and so on.

A further object of the invention is realized in a display device comprising such a backlight unit as described above. The devices preferably include monitors, projection devices, televisions and so on.

A further object according of the invention is realized by a method for producing a light-emitting unit as described above. The light-emitting unit may be produced in a number of steps, which are described below.

First, the solid state light source is mounted on the leadframe. Next, the leadframe and the solid state light source are aligned in a mold. Subsequently, at least the part of the leadframe and the solid state light source are molded with the molding material thereby forming at least the part of the lightguide. The advantages have been described previously.

In a further embodiment, the method of producing the light-emitting unit comprises two molding steps instead of a single molding step. In the molding step described above, the molding material is made of a heat and/or UV resistant material forming a first part of the lightguide. This first molding step is followed by a further molding step wherein the first part of the lightguide is then molded with a material possessing higher optical transmittance than the heat and/or UV resistant material forming a second part of the lightguide. The advantages have been discussed earlier. A further advantage is that after forming the first part of the lightguide in the first molding step it becomes easier to transport the light-emitting unit to another production unit and perform the second molding step. A further advantage is the modularity in the production of different products based on similar designs, for example after forming the fist part of the lightguide, the second part of the light guide can be formed in different dimensions.

In a further embodiment, the method comprises aligning a body in the mold with respect to the solid state light source, immediately prior to the step of molding, wherein the body is made of a base material. Preferably glass is used as the base material because of its high optical transmittance. The advantages have been discussed previously. After aligning the body with respect to the solid state light source, they are molded with the molding material thereby forming the light-emitting unit.

In a further embodiment of producing the light-emitting unit, immediately prior to aligning the solid state light source and the leadframe in a mold, the solid state light source and at least a part of the leadframe in the vicinity of the solid state light source are provided with a compliant layer. For example, silicones can be used to form the compliant layer. Dispensing materials such as silicones by dipping, potting, printing or any application process that can be applied for such materials can form the compliant layer. The advantages have been discussed previously.

Aspects of the present inventions will become apparent from and will be elucidated with respect to the embodiments described hereinafter with reference to the accompanying drawings. The drawings illustrate the embodiments of the invention and together with the description, serve to explain the principles of the invention. In the drawings:
Fig. 1A shows a schematic representation of a light-emitting unit comprising an array of solid state light sources mounted on a leadframe and molded with a molding material;
Fig. 1B shows a schematic representation of a solid state light source mounted on a leadframe and the molding material forming at least a part of the lightguide;
Fig. 1C shows a schematic representation of a solid state light source and the solid state light source mounted on the leadframe;
Fig. 1D shows a schematic representation of an array of solid state light sources mounted on the leadframe;
Fig 1E shows a schematic representation of a reflector casing attached to the leadframe forming a single unit;
Fig. 1F shows a schematic representation of the reflector casing attached to the leadframe and molded with the molding material;
Fig. 2 shows a schematic representation of a solid state light source and at least a part of the leadframe in the vicinity of the solid state light source being provided with a compliant layer;
Fig. 3A shows a longitudinal cross-section of a solid state light source mounted on a leadframe and a body which form the core lightguide and being molded with a molding material;
Fig. 3B shows a lateral cross-section of the body and the leadframe moulded with the molding material;
Fig. 3C shows a schematic representation of the body provided with a reflective layer;
Fig 3D shows a schematic representation of the body provided with a compliant layer;
Fig. 4A shows a schematic representation of a first part of the lightguide formed using a material of high thermal resistance and a second part of the lightguide formed using a material of high optical transmittance;
Fig. 4B shows a schematic representation of the first and second parts of the lightguide formed by different materials and being further molded with an additional molding material.

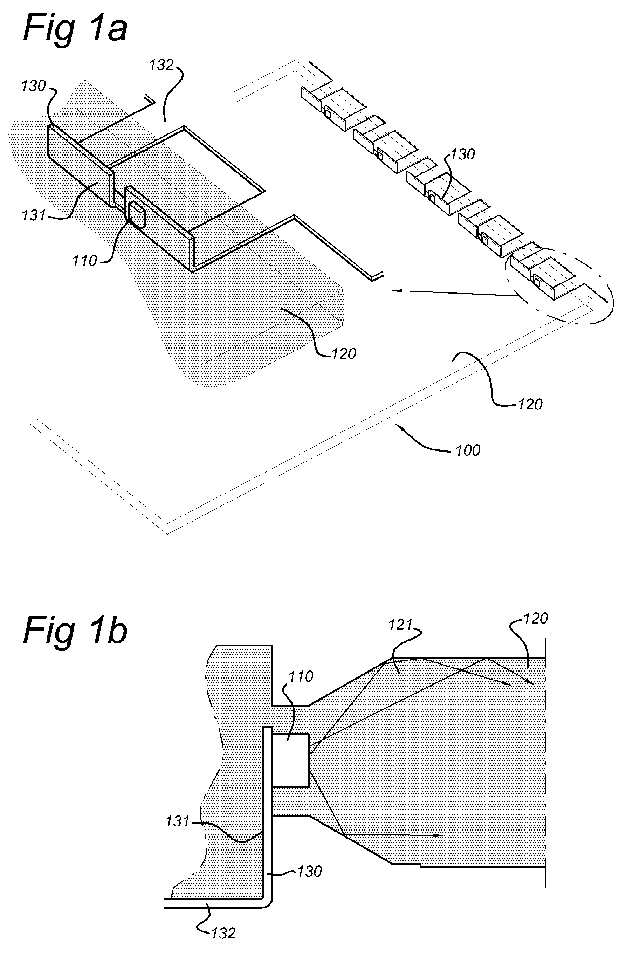

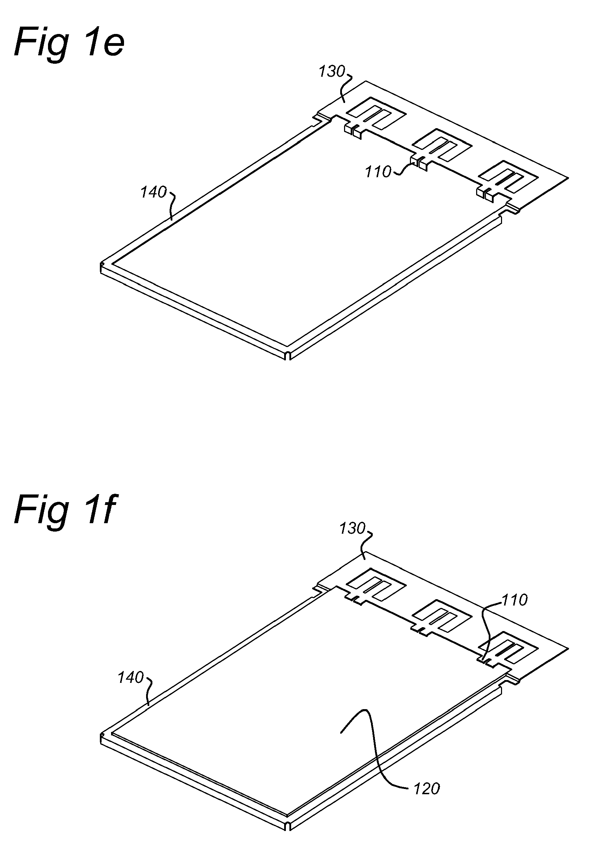

Fig. 1A shows a schematic representation of a light-emitting unit 100 according to the invention comprising an array of solid state light sources 110 mounted on a leadframe 130 and molded with a molding material, which forms at least a part of the lightguide 120. The inset in Fig 1A shows an individual element from the array of the solid state light sources 110, wherein the solid state light source 110, the leadframe 130 and the molding material forming at least a part of the lightguide 120 are clearly indicated.

Typically light emitting diodes (LED), LED dies, chips from an LED, lasers, laser diodes, and the likes are used as solid state light sources 110. The light-emitting unit 100 may comprise packaged or unpackaged solid state light sources 110. The solid state light source 110 may be a monochromatic source, an RGB source or a white light source.

The leadframe 130 comprises a first part 131 and a second part 132, the first part 131 arranged at 90 degrees to the second part 132. The solid state light source 110 is mounted on the first part 131 of the leadframe 130, and is arranged to make electrical contact with the leadframe 130. Mounting the solid state light source 110 on the leadframe 130 enables the solid state light source 110 to be top-firing in a direction that is parallel to the electrical contacting surface of the leadframe 130, while still allowing freedom in design for the orientation of the solid state light source 110 with respect to a lightguide 120. The second part 132 of the leadframe 130 is provided with connectors or connector patterns, which make electrical contact with an external circuitry, not shown in the figure. The external circuitry, for example, may be a printed circuit board (PCB). The connectors or connector patterns remove the need for providing separate or additional connectors from the external circuitry to the solid state light source 110. Individual interconnects from the solid state light source 110 to components on the PCB can be provided by adequately patterning the leadframe 130. An advantage is reduction in cost of producing the light-emitting unit 100 because additional connectors are not required. Further, the risk of the connectors being broken or damaged is reduced because of the mechanical strength of the leadframe 130 and the molding.

The solid state light sources 110 and at least the part of the leadframe 130 onto which the solid state light sources 110 are mounted is first placed in a mold. A single molding material for example, a thermoset material or a thermoplastic is used for molding or overmolding the solid state light source 110 and at least the part of the leadframe 130, wherein the molded thermoset material forms at least a part of the lightguide 120. The process of molding the solid state light sources 110 and at least a part of the leadframe 130 with a molding material forming the lightguide 120 provides a better alignment and mechanical fixation of the solid state light source 110 and the leadframe 130. Molding also reduces the risk of the solid state light sources 110 and/or any wire bonds connected thereto to be accidentally removed or broken. Further, because of the mechanical strength of the leadframe 130, a part of the lightguide 120 that is proximate to the leadframe 130 has better mechanical stability. Molding also eliminates air interfaces between the solid state light source 110 and the lightguide 120, thereby reducing loss of light at such interfaces due to reflection.

Fig. 1B shows a schematic representation of the solid state light source 110 mounted on the first part of the leadframe 130 and molded with the molding material, the molding material forming at least a part of the lightguide 120. A part of the lightguide 120 proximate to the solid state light source 110 is provided with a light-redirecting portion 121. The light-redirecting portion 121 is advantageous as the light emitted from the solid state light source 110 has an angular distribution in all directions of a hemisphere. Further, light rays emitted from the solid state light source 110 have an angle of incidence that is sometimes unsuitable for total internal reflection. However, light needs to be evenly distributed into the lightguide 120 and should also be incident at angles that are suitable for total internal reflection. The light-redirecting portion 121 redirects light that is incident at large angles to the light guiding direction such that the re-directed light is suitable to be totally internally reflected. It should however be apparent to a skilled person here that various other configurations may be implemented in which the solid state light source 110 can have different orientations.

Further, individual solid state light sources 110 can be mounted on respective leadframes 130. Several of these may be linearly arranged to form an array of light sources. In a certain implementation individual solid state light sources 110 on respective leadframes 130 and an array of solid state light sources 110 on a single leadframe 130 may be combined in a linear arrangement to form an array of light source. These can then be molded to form the light-emitting device 100.

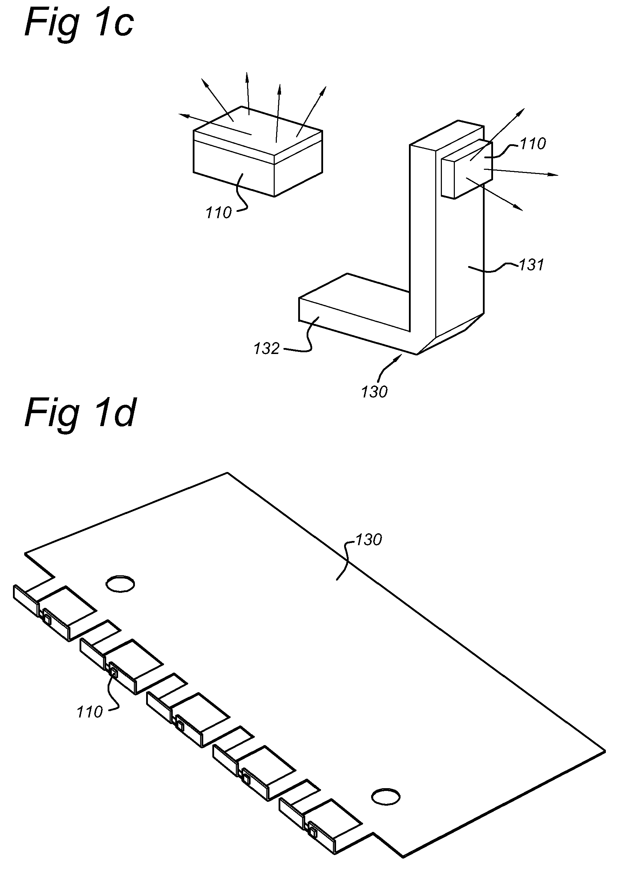

Fig. 1C shows a schematic representation of the solid state light sources 110, and the solid state light source 110 mounted on the leadframe 130. As discussed earlier the leadframe 130 enables the solid state light source 110 to be top-firing. The leadframe 130 provides better mechanical stability as compared to lead pins or lead films. The leadframe 130 also provides a better fixation for the solid state light source 110 and also better mechanical alignment when placed in a mold.

Fig. 1D shows a schematic representation of an array of solid state light sources 110 mounted on the leadframe 130. An advantage of an array of solid state light sources 110 is that solid state light sources 110 of different spectral distribution can be used. A further advantage is that using the leadframe 130 allows the solid state light sources 110 to be placed relatively close with respect to each other. Using an array of solid state light sources 110 increases the total light input into the lightguide 120. The thermal load per solid state light source 110 can be significantly reduced, as the solid state light sources 110 may be independently controlled using a variable resistor or the like so as to adjust the light output of each solid state light source 110.

Fig. 1E shows a schematic representation of the leadframe 130 and a reflector casing 140. The reflector casing 140 is attached to the leadframe 130 and these are arranged to form a single unit. The reflector casing 140 may be tray shaped, which may or may not have a bottom surface. The reflector casing 140 is preferably made of metal. The side and bottom surfaces of the reflector casing 140 may function as a reflective surface. Further, a metallic reflector casing 140 inherently behave as a specular reflector rather than as a diffuser of light. A diffuse reflector always redirects parts of light into directions that may become unsuitable for total internal reflection leading to light losses. A specular reflector on the other hand maintains the angular distribution of light rays such that the light rays are suitable for total internal reflection minimizing the loss of light.

Fig. 1F shows a schematic representation wherein at least a part of the leadframe 130 with the solid state light sources 110, which are not visible in the figure, and the reflector casing 140 are molded with a molding material. The molding material forms the lightguide 120, and integrates the solid state light sources 110 and at least a part of the leadframe 130 with the reflector casing 140. The integration eliminates air gaps between the reflective casing 140 and the lightguide 120, and also between the solid state light source 110 and the lightguide 120. A further advantage is that the leadframe 130 and the reflector casing 140 can be molded with the molding material in a single molding step.

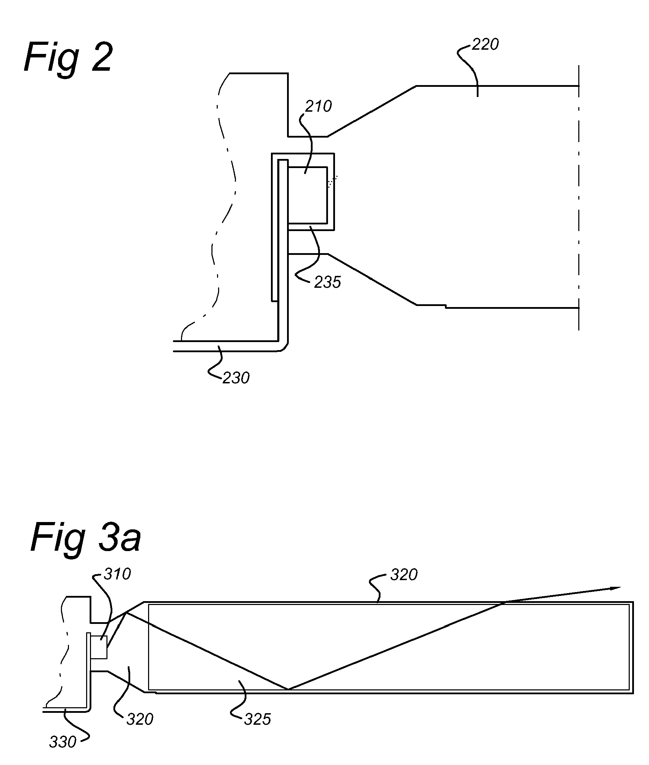

Fig. 2 shows a schematic representation of a solid state light source 210 and a leadframe 230 being provided with a compliant layer 235 in the vicinity of the solid state light source 210. The compliant layer 235 is provided prior to molding the solid state light source 110 and at least the part of the leadframe 130 with the molding material. The solid state light source 210 generates heat, which subjects the material around the solid state light source 110 to a thermal stress because of the differences in coefficients of thermal expansion of the materials causing de-lamination and cracking of the materials. Therefore, addition of the compliant layer 235, which is typically a transparent layer, functions as a stress buffer absorbing the thermal stress caused by differences in coefficients of thermal expansion of the materials. Preferably, materials such as silicones are commonly used as stress buffers. In addition to having good thermal properties, silicones also have good optical properties such as transmittance and refractive index, good resistance to heat and/or UV light etc as compared to thermoset materials. Therefore, the compliant layer 235 enhances the optical and mechanical functionality of the lightguide 220 and hence the lifetime of lightguide 220. Compliant materials, for example silicones, can be dispensed by methods such as dipping, potting, printing or any application process forming such a layer.

Fig. 3A shows a longitudinal cross-section of a solid state light source 310 and at least a part of the leadframe 330 and a body 325, for example a glass plate, which forms the core of the lightguide 320. The solid state light source and at least the part of the leadframe 330 are aligned with the body 325 in the mold, and molded with the molding material forming a single unit. The advantage of using glass as the core lightguide 325 is that glass is rigid, and when molded to form the light-emitting unit 100, lesser molding material is required to cross-link the core lightguide 325 with the leadframe 330 and the solid state light source 310. Further, since a major portion of the lightguide 320 is made of the body 325, which is for example glass, manufacturing of the light-emitting unit becomes cheaper and easier, because glass and similar materials are cheaper and have superior optical properties as compared to transparent molding materials, such as thermoset materials. This significantly reduces the cost of producing such a light-emitting unit 100.

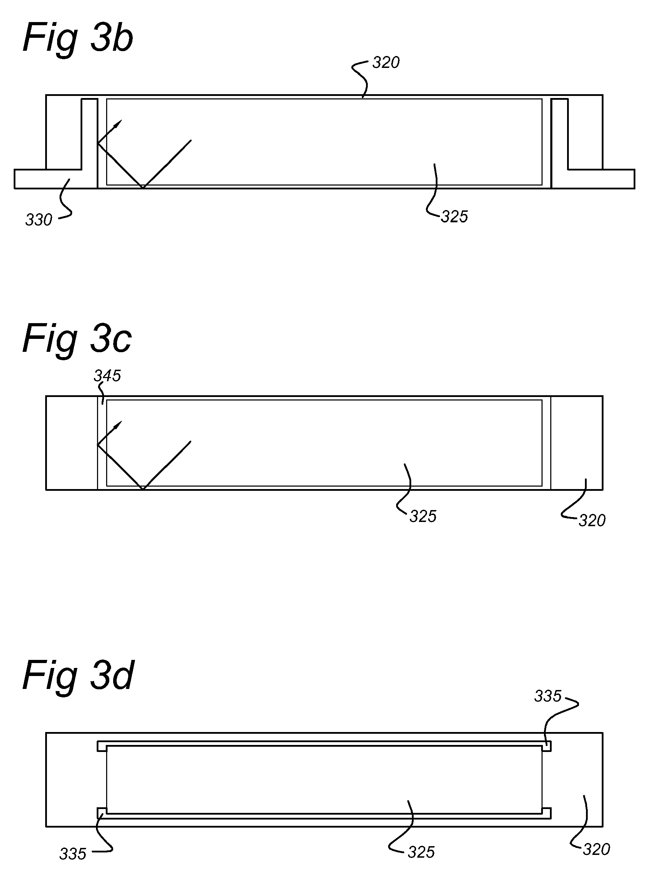

Fig. 3B shows a lateral cross section of the core lightguide 325 and the leadframe 330 with the solid state light source 310, not visible in the figure, moulded with the molding material forming the light emitting unit 100, wherein the leadframe functions as a reflector.

In a certain implementation when the reflector casing 140 is used, the molding can also link the body 325, the leadframe 330 and the reflector casing 140. The molding material makes the optical connection between the solid-state light source 310 and the body 325 by filling the cavities above and beneath the body 325.

In an alternate implementation, the body 325 may be coated at the edges with a reflective coating 345 as shown in Fig. 3C. The coated body, which is for example coated glass, will function as an internal specular reflector for the light. By molding the body 325, the molding material may extend beyond the coated edges 345. In this way the molding material will also function as a mechanical and environmental protection for the coated glass edges.

In a further implementation the body 325 may be provided with a compliant layer 335 as shown in Fig. 3D. The compliant layer 335 essentially matches the refractive indices between the glass body 325 and the molding material thereby preventing total internal reflection at the boundaries of the body 325 otherwise leading to loss of light due to absorption.

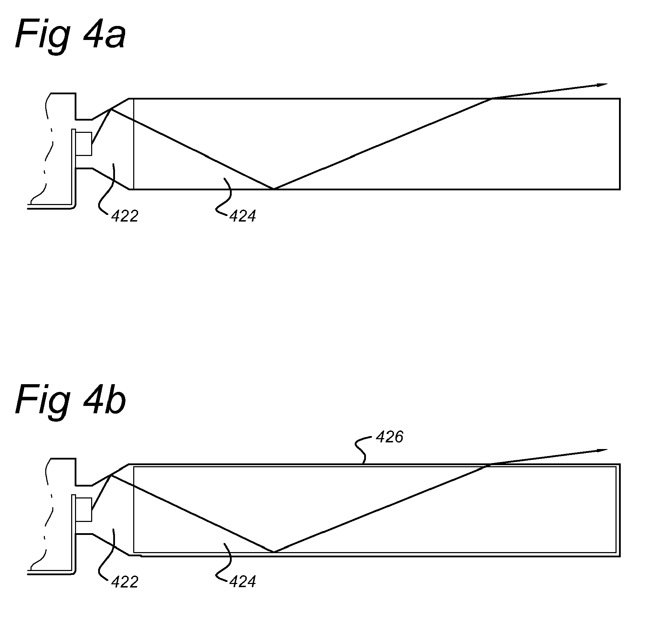

Figs. 4A and 4B show a schematic representation of a solid state light source mounted on a leadframe. A first part of the lightguide 422 is formed by molding at least a part of the leadframe and the solid state light source with a material that has high thermal resistance. This first part of the lightguide is then placed in a mold and molded with a material possessing high optical transmittance as compared to the material with high thermal resistance thereby forming a second part 424 of the lightguide.

In a further implementation, the first part 422 and the second part 424 of the lightguide, wherein the first part 422 of the light guide encompasses the solid state light source and at least the part of the leadframe, may be molded with a further molding material 426, for example a thermoset material, as shown in Fig. 4B.

The molding process described with respect to Figs. 1A - 1F is performed in a single step. In the single step process the solid state light source 110 and at least the part of the leadframe 130 are first placed in the mold and encapsulated for example with a single clear polymer. The solid state light source 110 and at least the part of the leadframe 130 are molded such that light emitted from the solid state light source 110 is in-coupled into the lightguide in a light guiding direction as discussed previously. For example if the lightguide is formed as a rectangular plate, the light is in-coupled from a lateral side and traverses along the longitudinal side. This concept is limiting in so far as only a single molding material can be used for which different functionalities will be required such as encapsulation, transparency, adhesion to the leadframe, and so on. The product thus formed can only be tested at the end of the process, which is a disadvantage. Therefore in order to overcome this disadvantage, the molding can be also performed in a two-step molding process.

The two-step molding process creates the possibility and flexibility of using different molding materials with different properties, which are better suited for the particular functionalities of different parts of the lightguide 120. For example, a first part 422 of the lightguide that is proximate to the solid state light source can be first molded with a molding material having a higher thermal and/or UV resistance, while a second part 424 of the lightguide is subsequently molded with a material having higher transmittive properties than the material with higher resistance.

By splitting up the molding process in two separate processes it becomes possible to insert a quality check. For example, in the first step, the leadframe 130 with the solid state light source 110 and the connectors are placed in a mold and molded with a molding material. This first part 422 of the lightguide can be checked for proper functionality before the second molding step is performed. For example, the solid state light source 110 can be tested for functionality such as light output, color point etc. After performing the required quality check, the first part 422 of the lightguide is subsequently placed in another mold and molded with the second molding material, having high optical transmittivity, forming the second part 424 of the lightguide. A further advantage of the two-step molding process is that after the first part 422 of the lightguide is formed, it becomes easier to transport the first part 422 either internally in a production line or between different factories for performing the second molding step.

The use of two consecutive molding steps also creates the possibility of modularity in the production of different products based on similar designs. For example, large numbers of solid state light sources 110 mounted on respective leadframes 130 can be molded with one mold creating a first part of a lightguide that can later be coupled with a different lightguide, which has a different dimension, thereby forming the light-emitting unit 100.

The molding material can be molded in any volume with a suitable mechanical function such as clicks, snaps, springs, placeholders etc. An advantage of the present process of molding over existing processes like the UV replica process is that this process can be executed with existing semiconductor packaging equipment and the process can be better controlled. The UV replica process relies on capillary force for filling the molds whereas in this case a well-defined transfer profile is used to create the optical structures. This creates a significant reduction in cycle time and improvement in the control of product dimensions.

It should be noted that the above-mentioned embodiments illustrate rather than limit the invention and that those skilled in the art will be able to design alternative embodiments without departing from the scope of the appended claims. In the claims, any reference signs should not limit the scope of the claim. The invention may be accomplished by combining the various embodiments described above. The invention can be implemented by means of hardware comprising several distinct elements.

It should further be noted that use of the verb "comprises/comprising" and its conjugations in this specifications, including the claims, is understood to specify the presence of stated features, integers, steps, components or groups thereof but not to exclude the presence of further features. It should also be noted that the indefinite article "a" or "an" preceding an element in a claim does not exclude the presence of a plurality of such elements. Moreover, any reference sign does not limit the scope of the claims. Furthermore, the invention resides in each and every novel feature or combination of features.

The invention may be summarized as follows: A light-emitting unit comprising a solid state light source mounted on a leadframe and a lightguide into which the solid state light source is to in-couple light into its light guiding direction. The solid state light source and at least a part of the leadframe are molded with a molded material, wherein the molding material forms at least a part of the lightguide.

## Claims

1. A light-emitting unit (100) comprising
- a solid state light source (110);
- a lightguide (120) arranged to guide light received from the solid state light source (110);
wherein the solid state light source (110) is positioned such that light emitted from the solid state light source (110) is in-coupled into the lightguide (120) in a light-guiding direction;
wherein
- the light-emitting unit (100) further comprises a leadframe (130);
- the solid state light source (110) is mounted on the leadframe (130), and
- the solid state light source (100) and at least a part of the leadframe (130) are molded with a molding material forming at least a part of the lightguide (120).

2. A light-emitting unit (100) as claimed in claim 1, **characterized in that** the leadframe (130) comprises a first part and a second part, the first part arranged at 90 degrees to the second part.

3. A light-emitting unit (100) as claimed in claim 1, **characterized in that** the leadframe (130) includes a reflector casing (140).

4. A light emitting unit (100) as claimed in claim 3 **characterized in that** the lightguide (120) is integrated within the reflector casing (140).

5. A light-emitting unit (100) as claimed in claim 3, **characterized in that** the reflector casing (140) is a specular reflector.

6. A light-emitting unit (100) as claimed in claim 1, **characterized in that** the lightguide comprises a body made of a base material.

7. A light-emitting unit (100) as claimed in claim 6, **characterized in that** the body is molded with the molding material.

8. A light-emitting unit (100) as claimed in claim 1, **characterized in that** a first part (422) of the lightguide proximate to the solid state light source (110) is made of a heat and/or an UV resistant material and a second part (424) of the lightguide away from the solid state light source (110) is made of a material possessing a higher optical transmittance than the heat and/or UV resistant material.

9. A light-emitting unit (100) as claimed in claim 1, **characterized in that** the solid state light source (210) and at least a part of the leadframe (230) in the vicinity of the solid state light source (210) is provided with a compliant layer (235).

10. A light-emitting unit (100) as claimed in claim 1, **characterized in that** the light-emitting unit (100) comprises a further solid state light source mounted on the leadframe (130) and molded with the molding material.

11. A light-emitting unit (100) as claimed in claim 1, **characterized in that** the light-emitting unit (100) comprises a further solid state light source and a further leadframe, the further solid state light source is mounted on the further leadframe, and the further solid state light source and at least a part of the further leadframe are molded with the molding material.

12. A backlight unit comprising the light-emitting unit (100) as claimed in any of the preceding claims.

13. A portable electronic device, in particular a mobile phone or a PDA, comprising the backlight unit as claimed in claim 12.

14. A display device comprising the backlight unit as claimed in claim 12.

15. A method of producing a light-emitting unit (100) as claimed in claim 1, the method comprising the steps:
- mounting the solid state light source (110) on the leadframe (130);
- aligning the leadframe (130) and the solid state light source (110) in a mold;
- molding at least the part of the leadframe (130) and the solid state light source (110) with the molding material thereby forming at least the part of the lightguide (120).

16. A method as claimed in claim 15 of producing the light-emitting unit (100) as claimed in claim 8, **characterized in that** in the molding step the molding material is the heat and/or UV resistant material, and the molding step is followed by a further step:
- molding the part of the lightguide with the material possessing a higher optical transmittance than the heat and /or UV resistant material forming the second part of the lightguide (424).

17. A method as claimed in claim 15 of producing the light-emitting unit (100) as claimed in claim 6, **characterized in that** the method comprises, immediately prior to the step of molding, the step:
- aligning the body in the mold with respect to the solid state light source (110).

18. A method as claimed in claim 15 of producing a light-emitting unit (100) as claimed in claim 9, **characterized in that** the method comprises, immediately prior to the step of aligning, the step:
- providing the solid state light source (210) and at least the part of the leadframe (230) in the vicinity of the solid state light source (210) with the compliant layer (235).
